# EUROPÄISCHE PATENTSCHRIFT

(11) **EP 1 742 336 B1**
(45) Veröffentlichungstag und Bekanntmachung des Hinweises auf die Patenterteilung: **09.03.2011**
(21) Anmeldenummer: 05106043.2
(22) Anmeldetag: 04.07.2005
(51) Int. Cl.: H02K 51/00, B60K 6/365, B60K 6/448, B60K 6/48, B60K 6/543

(54) **Stufenloses Elektrogetriebe**
Continuous electrical gearing
Transmission électrique continue

(43) Veröffentlichungstag der Anmeldung: 10.01.2007
(73) Patentinhaber: Oldenburg, Jörg, 21734 Oederquart (DE); Neumann, Jan, 57432 Alfstedt (DE)
(72) Erfinder: Oldenburg, Jörg, 21734 Oederquart (DE); Neumann, Jan, 57432 Alfstedt (DE)
(74) Vertreter: von Kreisler Selting Werner

(56) Entgegenhaltungen:
- EP-A- 0 798 844
- EP-A- 0 889 577
- US-A- 6 098 735
- PATENT ABSTRACTS OF JAPAN Bd. 017, Nr. 174 (E-1346), 5. April 1993 (1993-04-05) -& JP 04 331455 A (TAIHEIYOU KOUGIYOU KK), 19. November 1992 (1992-11-19)

## Beschreibung

Die Erfindung betrifft ein stufenlos arbeitendes Elektrogetriebe.

Bei herkömmlichen Zahnradgetrieben ist die Drehzahl stufenweise variierbar, wobei zum Schalten der Zahnradgetriebe Reibkupplungen oder hydraulische Kupplungen vorgesehen sind. Wenngleich derartige Getriebe einen hohen mechanischen Wirkungsgrad aufweisen, haben Sie dennoch den Nachteil, dass auf Grund der stufenweisen Drehzahlregelung in den meisten Fällen nicht der optimale Drehzahlbereich z.B. eines Verbrennungsmotors genutzt werden kann. Dies hat zur Folge, dass der energetische Gesamtwirkungsgrad aus Getriebe und Verbrennungsmotor in der Regel relativ schlecht ist.

Ferner sind stufenlos arbeitende Getriebe mit Riemen oder Schubgliederketten bekannt. Diese haben den Vorteil, dass eine stufenlose Drehzahlregelung möglich ist. Das Vorsehen von Riemen weist jedoch den Nachteil auf, dass diese starken Alterungseinflüssen ausgesetzt sind und der Gesamtwirkungsgrad derartiger Getriebe relativ schlecht ist. Schubgliederkettengetriebe weisen den Nachteil auf, dass das maximal übertragbare Drehmoment im Vergleich zu Zahnradgetrieben eher beschränkt ist.

Ferner sind bei Fahrzeugen mit geringen Fahrzeuggeschwindigkeiten, wie beispielsweise bei Baumaschinen und Ackerschleppern, hydrostatische Antriebe bekannt. Bei diesen wird die Leistung des Verbrennungsmotors in einen Ölstrom umgewandelt, der sodann einen Ölmotor antreibt. Obwohl der mechanische Wirkungsgrad eines hydrostatischen Antriebs relativ schlecht ist, können in Verbindung mit einem hoch entwickelten Getriebe-Motor-Management relativ gute Gesamtwirkungsgrade erzielt werden. Derartige Getriebe weisen jedoch neben der erzielbaren geringen Fahrzeuggeschwindigkeit den Nachteil auf, dass die Herstellungskosten eher hoch sind.

Da Elektromotoren gut regelbar sind, ist es ferner bekannt, mit Hilfe eines Verbrennungsmotors einen Generator zur Erzeugung von elektrischer Energie anzutreiben und die Drehzahlregelung durch eine Modulation der Frequenz, der Spannung und/oder des elektrischen Stroms vorzunehmen. Da sich die Wirkungsgrade der einzelnen Bestandteile Verbrennungsmotor, elektrischer Generator, Regelung und elektrischer Motor multiplizieren, weisen derartige Maschinen einen relativ schlechten Gesamtwirkungsgrad auf.

### Grundsätzliches - Funktionsweise einer elektrischen Maschine:

Rotierende elektrische Maschinen sind Energiewandler, die eine Umformung zwischen elektrischer und mechanischer Energie vornehmen. Die Leistung einer elektrischen Maschine wird auf der einen Seite durch die Größe der elektrischen Spannung U und dem Strom I, auf der anderen Seite durch das Drehmoment M und die Drehzahl n bestimmt.

### Elektrischer Generator:

Ein extern angetriebener Läufer (Rotor) induziert in einem mit einer Wicklung versehenen Ständer (Stator) bei Drehzahldifferenzen zwischen Rotor und Stator ein elektrisches Feld. Dieses Feld führt in der Statorwicklung bei Kurzschluss oder Belastung zu einer elektrischen Leistung. Durch den Leistungsfluss im Stator entsteht ein (Rück-) Drehmoment.

### Elektrischer Motor:

Umgekehrt verursacht ein Leistungsfluss im Stator auf den Rotor ein Drehmoment.

Aus EP 0 889 577 ist ein Elektrogetriebe mit einer mit einer Antriebseinrichtung verbindbaren Eingangswelle und einer über eine elektrische Kraftübertragungseinrichtung mit der Eingangswelle verbundenen Ausgangswelle beschrieben. Die elektrische Kraftübertragungseinrichtung weist mit der Eingangswelle verbundene Magnete auf, die in mit der Ausgangswelle verbundenen Spulen eine Leistung induzieren. Über eine mit den Spulen verbundene Schalteinrichtung kann eine ein Drehen der Ausgangswelle hervorrufende Magnetkraft erzeugt werden,

Aufgabe der Erfindung ist es, ein stufenloses Elektrogetriebe mit hohem Wirkungsgrad und großem Drehzahlbereich bzw. großer Spreizung zu schaffen.

Die Lösung der Aufgabe erfolgt erfindungsgemäß durch ein stufenloses Elektrogetriebe gemäß Anspruch 1.

Die Erfindung betrifft ein stufenlos arbeitendes Elektrogetriebe, welches einen hohen mechanischen Wirkungsgrad aufweist und für einen weiten Drehzahlbereich nutzbar ist. Die bislang übliche räumliche Trennung von Generator und Motor ist erfindungsgemäß aufgehoben und zu einer Einheit zusammengefügt.

Der Stator ist hierbei nicht fest, sondern drehbar gelagert. Der Rotor ist in dem hier beschriebenen elektrischen Getriebe als drehbare Eingangswelle, der Stator als drehbare Ausgangswelle ausgeführt (es kann sowohl der Läufer eingangsseitig und der Stator ausgangsseitig als auch der Stator eingangsseitig und der Läufer ausgangsseitig ausgeführt werden).

Über ein elektrisches Kraftübertragungselement ist die Eingangswelle erfindungsgemäß mit einer Ausgangswelle verbunden. Hierbei weist das elektrische Kraftübertragungselement in der Regel mit der Eingangswelle verbundene Magnete auf, die in mit der Ausgangswelle verbundenen Spulen eine Leistung induzieren, Eingangs- und Ausgangswellen sind erfindungsgemäß zur Übertragung der Drehbewegung von der Eingangs- auf die Ausgangswelle nicht formschlüssig miteinander verbunden. Zwischen der Eingangs- und der Ausgangswelle ist ein mechanisches und/oder elektrisches Getriebe zur Drehzahlregelung vorgesehen. Erfindungsgemäß sind die Spulen der ersten Kraftübertragungseinrichtung mit den Spulen der zweiten Kraftübertragungseinrichtung kurzgeschlossen.

Durch Öffnen eines beispielsweise eine Spule kurzschließenden Schalters wird das Drehmoment verringert, so dass die Drehzahl der Abtriebswelle verringert wird. Die Drehzahlregelung erfolgt somit mit Hilfe einer lastabhängigen Drehmomenterzeugung. Dies kann durch Variieren der elektrischen Leistung erfolgen. Ebenso ist es möglich, elektrische Leistung abzuführen und diese beispielsweise für andere Verbraucher zu nutzen oder einer Batterie bzw. Akkumulator zuzuführen.

Vorzugsweise weist die Schalteinrichtung eine Modulationseinrichtung auf, durch die eine Modulation der Frequenz, der Spannung und/ oder des Stroms möglich ist. Hierdurch ist es möglich, die Drehzahl der Ausgangswelle stufenlos zu variieren. Besonders bevorzugt ist es hierbei, die Modulationseinrichtung in elektronische Schalter zu integrieren.

Die mit der Eingangswelle verbundenen Magnete können zumindest teilweise als Elektromagnete ausgebildet sein. Durch eine elektrische Anregung der Magnete können Magnetfelder unterschiedlicher Stärke hervorgerufen werden. Dies führt zu einer Veränderung der in den Spulen induzierten Spannung und somit zur Beeinflussung der Drehzahl der Ausgangswelle.

Das erfindungsgemäße Elektrogetriebe weist insbesondere den Vorteil auf, dass ein hoher Gesamtwirkungsgrad von vorzugsweise über 90% erzielt werden kann. Ferner ist das Getriebegewicht verglichen mit bekannten Getrieben sehr gering. Auch die Gesamtwärmeverluste sind äußerst gering und gegenüber beispielsweise hydrostatischen Getrieben etwa nur halb so hoch. Da das Getriebe, von Schmierstoffen abgesehen, ölfrei arbeitet, sind die Herstellungskosten relativ gering. Ferner ist das Getriebe verschleißarm, da insbesondere keine mechanischen Schaltvorgänge erfolgen. Des Weiteren ist der Aufbau des Getriebes variierbar, so dass es an die einzelnen Drehzahlbereiche bestimmter Einsatzgebiete auf einfache Weise angepasst werden kann.

Die vorstehende Erfindung wird anhand der Zeichnung nachstehend beschrieben.

Es zeigt:

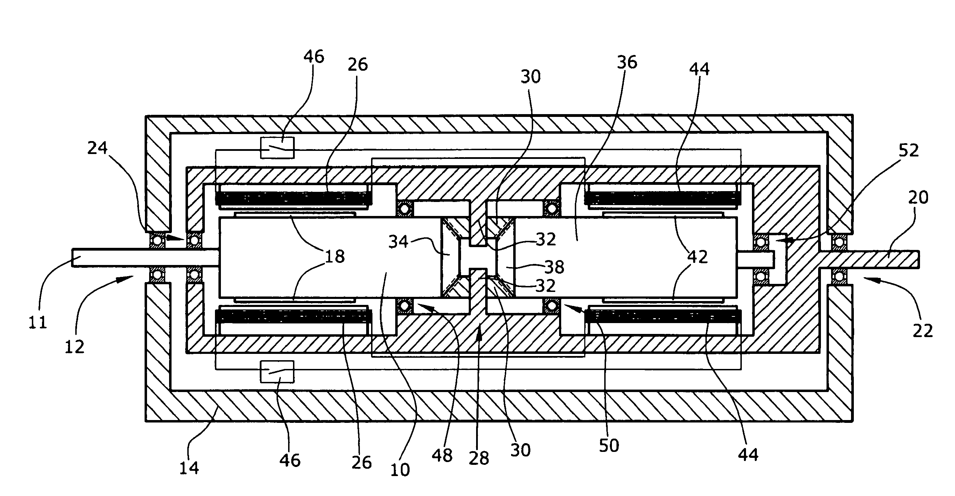

- Fig. 1: eine schematische Schnittansicht einer zweiten bevorzugten Ausführungsform der Erfindung.

Das erfindungsgemäße elektrische Getriebe gemäß der dargestellten Ausführungsform (Fig. 1) weist eine mit einer Antriebseinrichtung 11 verbindbare Eingangswelle auf. Hierbei kann es sich bei der Antriebseinrichtung beispielsweise um einen Verbrennungsmotor handeln. Ferner weist das Getriebe eine Ausgangswelle auf, wobei die Eingangswelle und die Ausgangswelle über eine elektrische Kraftübertragungseinrichtung miteinander verbunden ist. In der Ausgangswelle ist ein Proportionalgetriebe 30-34 und 38 gelagert. Es liegt ein geteilter Rotor vor, der aus einem generatorischen Teil 10 und einem motorischen Teil 36 besteht. Beide bewegen sich durch das in der Ausgangswelle gelagerte Proportionalgetriebe gegenläufig zueinander. Die Drehzahlen und Richtungen des Generator- und des Motorteils sind umgekehrt proportional zur Drehzahldifferenz zwischen dem generatorischen Teil der Eingangswelle 11 und der Ausgangswelle 20, resp. zwischen Rotor und Stator.

Diese Proportionalität wird erreicht, in dem die vorzugsweise Zahnräder 30, 34, 38, die die beiden Rotorhälften in gegenläufige Rotation versetzen, auf einer (oder mehreren) Wellen 32 (oder Halbwellen) gelagert sind, die wiederum in der Ausgangswelle 20, 28 (resp. dem Stator) gelagert ist.

Die Erzeugung eines Drehmomentes, welches zwischen Eingangs- und Ausgangswelle wirkt und je nach Ausgangswiderstand zu einer Mitnahme der Ausgangswelle mit der Eingangswelle führt, erfolgt zweistufig:
1. durch die Erzeugung einer elektrischen Leistung im Generatorteil und
2. durch den Verbrauch dieser im Generatorteil erzeugten elektrischen Leistung im Motorteil des Getriebes.

Die Eingangswelle im generatorischen Teil 11 des Getriebes bewegt sich vorauseilend gleichläufig zur Ausgangswelle 20. Die Eingangswelle im motorischen Teil 36 bewegt sich proportional gegenläufig zur Eingangswelle 11 und damit gegenläufig zur Ausgangswelle 20.

Beide Kräfte wirken in die gleiche Richtung: das durch die Leistungserzeugung verursachte Drehmoment wirkt als Schleppmoment ebenso auf die Ausgangswelle 20 wie das durch die motorische Leistung erzeugte Drehmoment als Schubmoment auf die Ausgangswelle 20 wirkt. Beide Momente, die bezogen auf die Ausgangswelle 20 in die gleiche Drehrichtung wirken, addieren sich zum Gesamtmoment.

Bedingt durch das Proportionalgetriebe verhalten sich die Drehzahlen der Eingangswelle im generatorischen Teil 10 des Getriebes absolut betrachtet umgekehrt proportional zu den Drehzahlen im motorischen Teil 36 des Getriebes. Dies hat zur Folge, das (eine gleiche Anzahl von Magneten im generatorischen wie im motorischen Teil des Getriebes vorausgesetzt) die Frequenzen zwischen Eingangswelle im generatorischen Teil des Getriebes und der Ausgangswelle und zwischen der Eingangswelle im motorischen Teil des Getriebes und der Ausgangswelle unabhängig von der Frequenz selber immer gleich hoch sind. Es ist daher nicht notwendig, zur Leistungsregelung des Getriebes eine (immer leistungsmindernde) Modulation der Frequenzen vorzunehmen.

Da das Schleppmoment des generatorischen Teil des Getriebes wie auch das Schubmoment im motorischen Teil des Getriebes als auch alle sonstigen mechanischen Widerstände im Getriebe in der Regel zur Folge haben, dass die Ausgangswelle 20 von der Eingangswelle 10 mitgezogen wird, kommt es erfindungsgemäß zu einer Steigerung des mechanischen Wirkungsgrades des Getriebes.

Die dargestellte bevorzugte Ausführungsform eines Elektrogetriebes weist eine Eingangswelle 11 auf. Die Eingangswelle 11 ist im dargestellten Ausführungsbeispiel eingangsseitig über ein Lager 12 in einem Gehäuse 14 gehalten. Die Eingangswelle 11 weist an einer Außenseite mehrere am Umfang verteilte Magnete 18 auf. Die Eingangswelle 11 ist mit einer Eingangs- bzw. Antriebseinrichtung, wie einem Verbrennungsmotor, verbunden.

Eine Ausgangswelle 20 ist über ein Lager 22 ebenfalls in dem Gehäuse 14 gelagert und auf der gegenüberliegenden Seite über ein Lager 24 auf der Eingangswelle 10 abgestützt. Die Ausgangswelle 20 ist teilweise als Hohlwelle ausgebildet, so dass die Eingangswelle 11 zumindest in dem Bereich, in dem die Magnete 18 angeordnet sind, von der Ausgangswelle 20 umgeben ist. Dem Magneten 18 gegenüberliegend trägt die Ausgangswelle 20 mehrere Spulen 26. Da zwischen den Magneten 18 und den Spulen 26 eine Relativbewegung stattfindet, wirken die Magnete 18 und die Spulen 26 als erste elektrische Kraftübertragungseinrichtung, da durch die Magnete 18 in den Spulen 26 Leistung induziert wird.

Mit Hilfe der ersten elektrischen Kraftübertragungseinrichtung 18, 26 erfolgt eine Übertragung der Drehzahl der Eingangswelle 11 auf die Ausgangswelle 20. Dies erfolgt auf Grund des zwischen der Eingangswelle 11 und der Ausgangswelle 20 aufgebauten elektrischen Feldes, das ein Drehmoment erzeugt. Durch ein derartiges "Schleppmoment" folgt die Ausgangswelle 20 lastabhängig der Eingangswelle 11. Dies wird erfindungsgemäß dadurch erreicht, dass einzelne oder sämtliche Spulen 26 kurz geschlossen oder mit dem motorischen Teil verbunden sind.

Im dargestellten zweiten Ausführungsbeispiel ist ferner ein mechanisches Getriebe, das mindestens eins oder mehrere Zahnräder 30 aufweist, die auf einer Querachse 32 drehbar gelagert sind, dargestellt. Die Querachse 32 ist fest mit der in diesem Bereich ebenfalls hohlen Ausgangswelle 20 verbunden. Die Zahnräder 30 stehen in kämmendem Eingriff mit einer Verzahnung 34, die an der Stirnseite der Eingangswelle 10, 11 vorgesehen ist.

Auf der der Stirnverzahnung 34 gegenüberliegenden Seite ist koaxial zu der Eingangswelle 10, 11 eine Zwischenwelle 36 vorgesehen. Die Zwischenwelle 36 weist ebenfalls eine Stirnverzahnung 38 auf, die mit den Zahnrädern 30 ebenfalls kämmend in Eingriff steht.

Durch Drehen der Antriebswelle 10 wird die Abrollgeschwindigkeit der Zahnräder 30 auf der Stirnverzahnung 34 variiert. Dies hat eine Veränderung der Drehzahl über die Querachse 32 mit den Zahnrädern 38 verbundene Zwischenwelle 36 zur Folge. Um die Ausgangswelle 20 zu drehen, ist diese an ihrer Innenseite mit Spulen 44 versehen, wobei die Spulen 44 vorzugsweise regelmäßig am Umfang verteilt angeordnet sind. Die Spulen 44 sind vorzugsweise gleichartig wie die Spulen 26 angeordnet.

Den Spulen 44 sind von dem gegenüberliegenden Magneten 42 mechanisch entkoppelt vorgesehen. Durch den in den Spulen 44 fließenden Strom wird ein Magnetfeld erzeugt. Die hierdurch erzeugte Magnetkraft wirkt auf die Magneten 42 und bewirkt ein Drehen der Ausgangswelle 20. Dieses bildet die zweite Kraftübertragungseinrichtung.

Eine Drehmomentvariierung kann dadurch erfolgen, dass beispielsweise nur ein Teil der Spulen 44 ein Magnetfeld erzeugt oder die Stärke der von den Spulen 44 erzeugten Magnetfelder variiert wird.

Die Leistungsversorgung der Spulen 44 erfolgt im dargestellten Ausführungsbeispiel mit Hilfe der ersten elektrischen Kraftübertragungseinrichtung 18, 26, wobei eine oder mehrere Schalteinrichtungen 46 vorgesehen sind.

Im dargestellten Ausführungsbeispiel erfolgt die Lagerung der Eingangswelle 10, 11 vorzugsweise zusätzlich zu dem Lager 12 über ein Lager 48, das zwischen der Eingangswelle 10 und der Ausgangswelle 20 angeordnet ist. Die Zwischenwelle 36 ist vorzugsweise über zwei Lager 50, 52, die im Inneren der Ausgangswelle 20 angeordnet sind, gelagert.

Vergleicht man das erfindungsgemäße Elektrogetriebe mit einem elektrischen Motor oder Generator, so entspricht die Eingangswelle 10 dem Rotor und die Ausgangswelle 20 einem Stator, wobei es sich um einen "drehbaren Stator" handelt. Die Eingangswelle 10 sowie die Zwischenwelle 36 entsprechen somit einem geteilten Rotor, der über das mechanische Getriebe 30, 32, 34, bei dem es sich insbesondere um ein Proportionalgetriebe handelt, miteinander verbunden ist. Der geteilte Rotor weist auf der in Fig. 2 linken Seite einen generatorischen Teil und auf der rechten Seite einen motorischen Teil auf. Die beiden Teile bewegen sich auf Grund des mechanischen Getriebes 30, 32, 34 gegenläufig. Die Drehzahl und die Richtung des Generatorteils und des Motoiteils sind somit umgekehrt proportional. Diese Proportionalität wird erreicht, in dem die vorzugsweise Zahnräder 30, 32, 34, 38, die die beiden Rotorhälften in gegenläufige Rotationen versetzen, auf einer (oder mehreren) Wellen 32 (oder Halbwellen) gelagert sind, die wiederum in der Ausgangswerte 20, 28 (resp. dem Stator) gelagert ist.

Um die Drehzahl der Ausgangswelle bezogen auf die Drehzahl der Eingangswelle zu regeln, ist eine lastabhängige Drehmomenterzeugung notwendig. Dies erfolgt unabhängig von der Frequenz der elektrischen Leistung ausschließlich über die Variation der elektrischen Leistung. Dabei wird die gesamte im generatorischen Teil des Getriebes erzeugte elektrische Leistung im Regelfall in situ in motorische Leistung umgesetzt. Es wird im Regelfall nur die Leistungserzeugung geregelt, nicht aber der erzeugte Leistung selbst (leistungsmindernd) moduliert.

### Regelung der Drehzahldifferenzen zwischen Eingangs- und Ausgangswelle:

Zur Leistungsübertragung ist es erforderlich, dass die Ausgangsdrehzahl geringer als die Eingangsdrehzahl ist. Folgende Regelvarianten zur Veränderung von übertragbaren Drehmomenten und Ausgangsdrehzahlen sind möglich:
1. Kurzgeschlossene Statorwicklungen (oder technische Alternativen) und Permanentmagnete oder nicht geregelte Elektromagnete auf dem Läufer.
2. Kurzgeschlossene Statorwicklungen und regelbare Elektromagnete auf dem Läufer.
3. Permanentmagnete oder nicht geregelte Elektromagnete auf dem Läufer und Statorwicklungen, die über Schalter kurzgeschlossen werden können.
4. Lösung 2. und 3. kombiniert, d.h., regelbare Elektromagnete auf dem Läufer in Kombination mit Statorwicklungen, die über Schalter kurzgeschlossen werden können.

Die vorgenannten Regelmöglichkeiten 1-4 sind im "generatorischen" Teil des Getriebes möglich, ohne den motorischen Teil zu nutzen. Im Regelfall wird der generatorische und der motorische Teil des Getriebes genutzt, wodurch sich im motorischen Teil folgende zusätzliche Regelmöglichkeiten ergeben.
5. Regelbare Elektromagnete auf dem Läufer.
6. Permanentmagnete oder nicht geregelte Elektromagnete.
7. Teilweise zugeschaltete Statorwicklungen, die vom generatorischen Teil des Getriebes oder externen Leistungsquellen gespeist werden.

Es ist auch möglich, die im generatorischen Teil des Getriebes erzeugte Leistung an einen externen Verbraucher oder Akkumulator ganz oder teilweise auszuschleusen. Weiterhin ist es möglich, das Getriebe mit einem Elektromotor zu kombinieren, der z.B. aus einem Akkumulator stammende elektrische Leistung in eine zusätzliche oder alleinige Unterstützung der Drehmomente, Leistung und Drehzahl der Ausgangswelle umwandelt.

## Patentansprüche

1. Elektrogetriebe, mit
einer mit einer Antriebseinrichtung verbindbaren Eingangswelle (11),
einer über eine erste elektrische Kraftübertragungseinrichtung (18, 26) mit der Eingangswelle (11) verbundenen Ausgangswelle (20),
wobei die erst elektrische Kraftübertragungseinrichtung (18, 26) mit der Eingangswelle (11) verbundene Magnete (18) aufweist, die in mit der Ausgangswelle (20) verbundenen Spulen (26) eine Leistung induzieren,
einer mit den Spulen (26) verbundenen Schalteinrichtung (46) zur Erzeugung einer ein Drehen der Ausgangswelle (20) hervorrufenden Magnetkraft,
einem zwischen der Eingangswelle (11) und einer Zwischenwelle (36) angeordneten in der Ausgangswelle (20) gelagerten mechanischen Proportionalgetriebe (30, 32, 34), so dass sich Eingangswelle (11) und Zwischenwelle (36) gegenläufig zueinander drehen, und
einer mit der Zwischenwelle (36) und der Ausgangswelle (20) verbundenen zweiten elektrischen Kraftübertragungseinrichtung (36, 42, 44) zur Drehzahländerung zwischen Eingangswelle (11) und Ausgangswelle (20), wobei die zweite elektrische Kraftübertragungseinrichtung mit der Ausgangswelle (20) verbundene Spulen (44) aufweist, die mit mit der Zwischenwelle (36) verbundenen Magneten (42) zur elektrischen Erzeugung eines Drehmoments zusammenwirken, wobei die Spulen (26) der ersten Kraftübertragungseinrichtung mit den Spulen (44) der zweiten Kraftübertragungseinrichtung über die Schalteinrichtung (46) kurzgeschlossen sind.

2. Elektrogetriebe nach Anspruch 1, **dadurch gekennzeichnet, dass** die Magnetkraft durch Kurzschließen einzelner und/oder aller Spulen (26, 66) erfolgt.

3. Elektrogetriebe nach Anspruch 1 oder 2, **dadurch gekennzeichnet, dass** das mechanische Getriebe (30, 32, 34) Verzahnungselemente (30, 34), insbesondere eine Kegelradverzahnung oder beliebige Alternativen dazu, aufweist.

4. Elektrogetriebe nach einem der Ansprüche 1 - 3, **dadurch gekennzeichnet, dass** die Verzahnungselemente (30, 34) über eine Querachse (32), die insbesondere mindestens ein Zahnrad (30) trägt, mit der Ausgangswelle (20) verbunden sind.

5. Elektrogetriebe nach einem der Ansprüche 1 - 4, **dadurch gekennzeichnet, dass** die Eingangswelle (11) eine mit dem mindestens einen Zahnrad (30) zusammenwirkende Stirnverzahnung (34) aufweist.

6. Elektrogetriebe nach einem der Ansprüche 1-5, **dadurch gekennzeichnet, dass** sich die Eingangswelle (10, 11) und die Ausgangswelle (20, 60) in axialer Richtung zumindest teilweise überlagern.

7. Elektrogetriebe nach einem der Ansprüche 1-6, **dadurch gekennzeichnet, dass** die Modulationseinrichtung in elektronische Schalter integriert ist.

8. Elektrogetriebe nach einem der Ansprüche 1-7, **dadurch gekennzeichnet, dass** die Magnete (18) zumindest teilweise als Elektromagnete ausgebildet sind und vorzugsweise mit einer Schalteinrichtung verbunden sind.

9. Elektrogetriebe nach einem der Ansprüche 1-8, **dadurch gekennzeichnet, dass** die Schalteinrichtung (46) eine Modulationseinrichtung, insbesondere zur Modulation der Frequenz und/oder der Spannung und/ oder des Stroms aufweist.

10. Elektrogetriebe nach einem der Ansprüche 1-9, bei welchem die Drehzahlregelung mit Hilfe einer lastabhängigen Drehmomenterzeugung erfolgt.

11. Elektrogetriebe nach einem der Ansprüche 1 - 10, bei welchem ein Teil oder die gesamte elektrische Leistung an andere Verbraucher oder Akkumulatoren abgegeben werden kann.

12. Elektrogetriebe nach einem der Ansprüche 1 - 10, bei welchem die Drehzahlregelung durch Variieren der elektrischen Leistung erfolgt.

## Claims

1. An electric transmission comprising
an input shaft (11) adapted to be connected to a drive means,
an output shaft (20) connected to the input shaft (11) via a first electric power transmission means (18, 26),
said first electric power transmission means (18, 26) comprising magnets (18) connected with the input shaft (11) and inducing a power into coils (26) connected to the output shaft (20),
a switching means (46), connected to the coils (26), for generating a magnetic force causing a rotation of the output shaft (20),
a mechanical proportional transmission (30, 32, 34) arranged between the input shaft (11) and an intermediate shaft (36), the transmission being supported in the output shaft (20) such that the input shaft (11) and the intermediate shaft (36) rotate in mutually opposite senses, and
a second electric power transmission means (36, 42, 44), connected to the intermediate shaft (36) and the output shaft (20) for varying the speed between the input shaft (11) and the output shaft (20), said second electric power transmission means comprises coils (44) connected to the output shaft (20), said coils cooperating with magnets (42), connected to the intermediate shaft (36), for the electric generation of a torque, the coils (26) of the first power transmission means being short-circuited with the coils (44) of the second power transmission means via said switching means (46).

2. The electric transmission of claim 1, **characterized in that** the magnetic force is provided by short-circuiting individual and/or all coils (26, 66).

3. The electric transmission of claim 1 or 2, **characterized in that** the mechanical transmission (30, 32, 34) has toothed gearing elements (30, 34), especially a bevel-shaped toothed gearing or optional alternatives.

4. The electric transmission of one of claims 1-3, **characterized in that** the gearing elements (30, 34) are connected to the output shaft (20) via a transverse axis (32) which, in particular, carries at least one gear (30).

5. The electric transmission of one of claims 1-4, **characterized in that** the input shaft (11) comprises a front toothed gearing (34) cooperating with said at least one gear (30).

6. The electric transmission of one of claims 1-5, **characterized in that** the input shaft (10, 11) and the output shaft (20, 60) are at least partly superposed in the axial direction.

7. The electric transmission of one of claims 1-6, **characterized in that** a modulation means is integrated in electronic switches.

8. The electric transmission of one of claims 1-7, **characterized in that** the magnets (18) are at least partly designed as solenoids and are preferably connected with a switching means.

9. The electric transmission of one of claims 1-8, **characterized in that** the switching means (46) comprises a modulation means, especially for modulating the frequency and/or the voltage and/or the current.

10. The electric transmission of one of claims 1-9, wherein the speed control is effected by means of a load-dependent torque generation.

11. The electric transmission of one of claims 1 - 10, wherein a part or the entire electric power can be discharged to other consumer loads or accumulators.

12. The electric transmission of one of claims 1 - 10, wherein the speed control is effected by varying the electric power.

## Revendications

1. Engrenage électrique comprenant
un arbre d'entrée (11) apte à être connecté à un moyen d'entrainement,
un arbre de sortie (20) connecté à l'arbre d'entrée (11) par l'intermédiaire d'un premier moyen électrique de transmission de force (18, 26),
ledit premier moyen électrique de transmission de force (18, 26) comprenant des aimants (18) connectés audit arbre d'entrée (11), induisant de puissance dans des bobines (26) connectées audit arbre de sortie (20),
un moyen de commutation (46), connecté auxdites bobines (26), pour générer une force magnétique causant la rotation dudit arbre de sortie (20),
un engrenage proportionnel mécanique (30, 32, 34) disposé entre ledit arbre d'entrée (11) et un arbre intermédiaire (36) et supporté dans ledit arbre de sortie (20) de sorte que ledit arbre d'entrée (11) et ledit arbre intermédiaire (36) tournent en des directions opposées l'un par rapport à l'autre, et
un deuxième moyen électrique de transmission de force (36, 42, 44) disposé entre l'arbre intermédiaire (36) et l'arbre de sortie (20) pour varier la vitesse entre l'arbre d'entrée (11) et l'arbre de sortie (20), ledit deuxième moyen électrique de transmission de force (20) comprenant des bobines (44) coopérant avec des aimants (42) connectés à l'arbre intermédiaire (36) pour générer électriquement un couple, lesdites bobines (26) dudit premier moyen de transmission de force étant court-circuitées avec les bobines (44) dudit deuxième moyen de transmission de force par l'intermédiaire du moyen de commutation (46).

2. Engrenage selon la revendication 1, **caractérisé en ce que** la force magnétique est obtenue par la mise en court-circuit de bobines individuelles et/ou de toutes les bobines (26, 66).

3. Engrenage selon la revendication 1 ou 2, **caractérisé en ce que** l'engrenage mécanique (30, 32, 34) comprend des éléments d'engrènement (30, 34), à savoir un engrènement à roue dentée conique ou des alternatives optionnelles.

4. Engrenage selon l'une quelconque des revendications 1-3, **caractérisé en ce que** les éléments d'engrènement (30, 34) sont connectés à l'arbre de sortie (20) par un axe transversal (32) portant, en particulier, au moins une roue dentée (30).

5. Engrenage selon l'une quelconque des revendications 1-4, **caractérisé en ce que** ledit arbre d'entrée (11) comprend un engrènement à roue dentée cylindrique (34) coopérant avec ladite au moins une roue dentée (30).

6. Engrenage selon l'une quelconque des revendications 1-5, **caractérisé en ce que** ledit arbre d'entrée (10, 11) et ledit arbre de sortie (20, 60) se superposent au moins partiellement dans la direction axiale.

7. Engrenage selon l'une quelconque des revendications 1-6, **caractérisé en ce qu'**un moyen de modulation est intégré dans des commutateurs électroniques.

8. Engrenage selon l'une quelconque des revendications 1-7, **caractérisé en ce que** les aimants (18) sont au moins partiellement réalisés comme électroaimants et sont, de préférence, connectés à un moyen de commutation.

9. Engrenage selon l'une quelconque des revendications 1-8, **caractérisé en ce que** le moyen de commutation (46) comprend un moyen de modulation, notamment pour moduler la fréquence et/ou la tension et/ou le courant.

10. Engrenage selon l'une quelconque des revendications 1-9, **caractérisé en ce que** la régulation de vitesse est réalisée à l'aide d'une génération de couple en dépendance de la charge.

11. Engrenage selon l'une quelconque des revendications 1 - 10, **caractérisé en ce qu'**un part ou toute la puissance électrique peut être fourni à autres récepteurs ou accumulateurs.

12. Engrenage selon l'une quelconque des revendications 1 - 10, **caractérisé en ce que** la régulation de vitesse est réalisée par variation de la puissance électrique.
